# EUROPEAN PATENT APPLICATION

(11) **EP 4 481 070 A1**
(43) Date of publication of application: **25.12.2024**
(21) Application number: 23382637.9
(22) Date of filing: 22.06.2023
(51) Int. Cl.: C22B 7/00, C22B 7/02, C22B 3/00, C22B 19/30, C22B 9/22

(54) **PROCESS FOR THE EXTRACTION OF ZINC FROM ELECTRIC ARC FURNACE DUST**

(71) Applicant: Técnicas Reunidas, S.A., 28050 Madrid (ES)
(72) Inventor: OLMO LORENZO, Juan, 28050 Madrid (ES); OCAÑA GARCÍA, Nuria, 28050 Madrid (ES); PERICET CÁMARA, Ramón, 28050 Madrid (ES); SÁNCHEZ ROJO, Antonio José, 28050 Madrid (ES); FRADES TAPIA, María, 28050 Madrid (ES)
(74) Representative: ABG Intellectual Property Law, S.L.

(57) **Abstract**

The present invention refers to a process for the extraction of zinc from electric arc furnace dust (EAFD), said process comprising a first leaching step in an alkaline leaching solution, a step of melting the solid residue from said first leaching, and a step of adding the product obtained after melting to the liquid phase resulting from the first leaching.

## Description

### FIELD OF THE INVENTION

The present invention relates to the field of zinc recovery processes, and more particularly to the extraction of zinc from the treatment of Electric Arc Furnace (EAF) dust.

### BACKGROUND

Electric arc furnace (EAF) dust is a waste product generated when steel scrap is melted in an electric arc furnace by forming electric arcs between the graphite electrodes and the scrap metal. During EAF steel production, zinc and other metals are evaporated as dust containing particles of the metal oxides. This dust is generated in amounts ranging between 15-20kg per ton of steel produced.

Steel dust is considered a hazardous industrial waste because it contains heavy metals (lead, chromium, cadmium, zinc, etc.). Consequently, economic and environmental concerns have been raised over ways and methods to adequately handle EAF dust. Due to the high content of zinc and other valuable metals in this type of dust, metal recovery is becoming an increasingly desirable strategy to reduce the environmental impact of the leachable toxic metals, and generating commercial products.

Therefore, efficient extraction of zinc from electric arc furnace dusts has been the object of extensive research. Diverse pyrometallurgical and hydrometallurgical processes have been developed to treat this material.

In hydrometallurgical processing, the operation of leaching is essential. Zinc is found in EAF dust in two main species: in the form of oxide as zincite (ZnO) or in the form of ferrite as franklinite, the latter being considerably resistant to leaching. Several research efforts have been made to develop a hydrometallurgical method to increase the rate of zinc recovery by optimization of leaching parameters such as the leaching agent, temperature and pressure.

Dutra et al. (Minerals Engineering, 2006, 19, 478-485) studied different alkaline leaching conditions in order to dissolve the zinc present in an EAF dust: (i) conventional agitation leaching; (ii) pressure leaching; (iii) conventional leaching following a microwave pretreatment and (iv) leaching with agitation provided by an ultra-sonic probe. The highest zinc recovery from the EAF dust, containing about 12% of zinc, was about 74%.

Xia et al. (Minerals Engineering, 2000, 13(1), 79-94) incorporated microwave radiation as the energy source in the hydrometallurgical caustic leaching process for EAF dust treatment. The variables which were investigated were: leaching time, microwave power, caustic concentration and the solid to liquid ratio. The highest zinc recovery by this method was about 80%.

Laubertova et al. (Arch. Metall. Mater., 2020, 65(1), 321-328) also studied the effects of microwave-assisted leaching as compared to conventional leaching, observing a 16% increase in zinc recovery and 26% increase in lead recovery when performing alkaline leaching under microwave irradiation. However, the maximum zinc recovery attained was 50%.

However, the above mentioned processes fail to leach the zinc ferrite contained in the EAF dust as a major phase to a significant extent. Therefore, there remains an important need to develop new efficient and cost-effective procedures so that higher yields can be obtained in the recovery of zinc from electric arc furnace dusts.

### BRIEF DESCRIPTION OF THE INVENTION

The authors of the present invention have developed a process for zinc recovery based on extraction of zinc from metallurgical waste as raw material, specifically dusts that are originated during the manufacture of steel and cast iron from ferrous scrap using electric arc furnaces. These dusts are mainly composed of metallic oxides, being the major components zinc and iron. In the specific case of zinc, it is found in the dust in the form of two main species: 50-70% of Zn is found as zinc oxide (ZnO) or zincite, a relatively labile species. The remaining 30-50% is found in the form of franklinite or zinc ferrite (ZnₓFe₃₋ₓO₄), which represents a particularly refractory species for the extraction of zinc.

The authors have surprisingly found that the process of the invention allows to at least partially break the frankilinite structure and increase the amount of zinc extracted from EAF dust. Advantageously, said process has allowed increasing the yield for the zinc extraction up to 95%.

Additionally, the process of the present invention allows to recover more than 95% of the iron contained in said dust in the form of recoverable oxides for the steel manufacturing or iron casting processes.

Therefore, the present invention relates to a process for the extraction of zinc from an electric arc furnace dust, said process comprising the steps of
a) providing an electric arc furnace dust;
b) optionally washing said dust to at least partially remove soluble ion impurities;
c) leaching the electric arc furnace dust of step (a) or step (b) in an alkaline aqueous solution having a pH of at least 12 at a temperature between 75 and 95 °C to yield a leached solution and a non-leached solid residue;
d) adding solid NaOH to the solid residue from step (c) and heating the resulting mixture to yield a melted product; and
e) adding the melted product resulting from step (d) to the leached solution from step (c), while keeping the resulting mixture at a pH of at least 12 and at a temperature between 75 and 95 °C to yield a zinc-rich liquor.

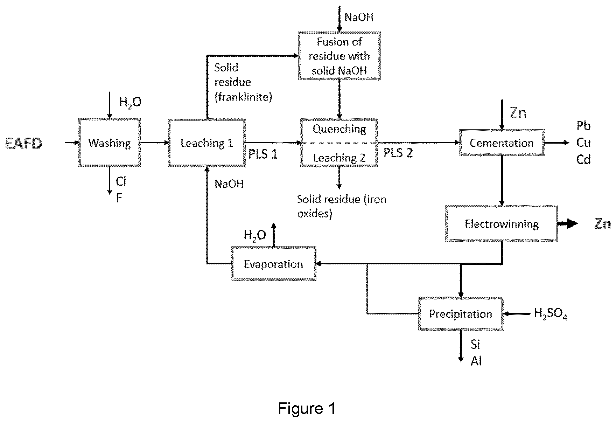

The different steps of the process of the invention are detailed herein below and also they are schematically represented in a flow chart as depicted in Figure 1.

### FIGURES

Figure 1 illustrates a flow chart schematically representing the steps of the process of the invention and the further purification treatment.

### DETAILED DESCRIPTION OF THE INVENTION

As defined above, the invention relates to a process for the extraction of zinc from an electric arc furnace dust, said process comprising the steps of
a) providing an electric arc furnace dust;
b) optionally washing said dust to at least partially remove soluble ion impurities;
c) leaching the electric arc furnace dust of step (a) or step (b) in an alkaline aqueous solution having a pH of at least 12 at a temperature between 75 and 95 °C to yield a leached solution and a non-leached solid residue;
d) adding solid NaOH to the solid residue from step (c) and heating the resulting mixture to yield a melted product; and
e) adding the melted product resulting from step (d) to the leached solution from step (c), while keeping the resulting mixture at a pH of at least 12 and at a temperature between 75 and 95 °C to yield a zinc-rich liquor.

The different steps of the process of the invention are detailed herein below and also they are schematically represented in a flow chart as depicted in Figure 1.

### Step (a)

The first step of the process of the invention is the provision of an electric arc furnace dust.

As used herein, Electric Arc Furnace (EAF) dust refers to a waste material that is generated during the production of steel in electric arc furnaces.

The major components in EAF dust are iron and zinc usually in the oxide form. In addition, EAF dust contains smaller quantities of calcium, magnesium, manganese, chloride, lead, cadmium and other trace elements.

The particles in EAF dust tend to exist as aggregates consisting of very fine individual particles, typically with an average particle size of less than 5 microns. In a particular embodiment, the EAF dust to be used according to the process of the invention, may be finely ground until reaching the appropriate average particle size. In a particular embodiment, the average particle size ranges from 10 to 30 µm as measured using Matersizer from Malvern instrument.

The composition of the EAF dust varies considerably. It is dependent not only on the scrap used, the type of steel being made, but also on the operating conditions and procedures.

In a particular embodiment, the concentration of zinc in the dust ranges from 20 to 40 wt%, preferably the concentration of zinc ranges between 25 and 35 wt%, relative to the total weight of the dust. In a more particular embodiment, a 50-70% of the total zinc present in the dust is in the form of zinc oxide and a 30-50% of the total zinc present in the dust is in the form of zinc ferrite.

In addition to zinc, the dust also contains a considerable percentage of iron. In a particular embodiment, the concentration of iron in the dust ranges from 15 to 50 wt% iron relative to the total weight of the dust.

The EAF dust may contain lesser percentages, such as 0.1-10 wt%, of other metals such as lead, copper, manganese, calcium, silicon, magnesium, aluminum, cadmium, chromium and/or nickel, preferably in the form of oxides. The EAF dust may also contain chlorides, fluorides, sodium and potassium species.

In a preferred embodiment, the EAF dust has a composition as shown in the Table below:

| Element | wt% |
|---|---|
| Zn | 25-30 % |
| Fe | 25-30 % |
| CaO | 5-10 % |
| Cl | 2-5 % |
| MgO | 2-5 % |
| Mn | 2-5 % |
| SiO2 | 2-5 % |
| Pb | 1-2 % |
| AlO3 | 1-2 % |
| S | 0.1-1 % |
| F | 0.1-1 % |

### Step (b)

Optionally, the process may include a step (b) of washing the EAF dust. The conditions at the washing step allow to at least partially separate water-soluble species such as the chlorides, fluorides, sodium and potassium ions, and therefore a washed EAF dust is obtained.

The dust may be washed with a washing agent selected from water, including tap water, distilled water or deionized water; or any liquid medium suitable to remove water-soluble impurities known in the art. Optionally, the washing agent may include additional materials, such as, for example, alkali for pH control, surfactants, soaps, and the like. In a preferred embodiment, the dust is washed with water.

The washing may be performed by passing the washing agent through the dust, by slurrying the dust in the washing agent or by a combination thereof. If the washing is performed by slurrying the dust in a washing agent, the washing agent may be removed by filtering the slurry, optionally under vacuum.

In a particular embodiment, the weight ratio of dust to washing agent in the washing step ranges from 0.1:5 to 2:1, preferably from 1:1 to 1:5 , In a more preferred embodiment, the washing step is performed at a dust:washing agent ratio of about 2:3.

In a particular embodiment, the washing agent may be heated prior to washing, which may enhance impurity removal. In a particular embodiment, the washing is performed at a temperature ranging from room temperature to 90 °C. In a preferred embodiment, the dust is washed at room temperature. As used herein, room temperature refers to a temperature of between about 15° C and about 35° C.

In a preferred embodiment, the dust is slurried, filtered and washed by passing a stream of water at room temperature through a filter cake, being the dust to water weight ratio between 1:1 and 1:5.

In a particular embodiment, the dust may be subjected to drying to remove any remaining washing agent. The drying may be carried out by methods known in the art. The drying may be carried out, for example, under air, under an inert atmosphere or under vacuum. In a particular embodiment, the drying is performed at a temperature ranging from room temperature to 100 °C. In a further preferred embodiment, the dust is dried at 70°C for 24 hours.

### Step (c)

The dust from step (a) or the washed dust obtained after step (b), if conducted, is subjected to a leaching step (c) with an alkaline aqueous solution (also referred to as aqueous leaching solution).

The aqueous leaching solution used to leach the zinc contained in the electric arc furnace dust is highly basic, more particularly the aqueous leaching solution (or alkaline aqueous solution) has a pH of at least 12. In particular, said aqueous leaching solution is added so as the leaching step takes place at a pH of at least 12.

Under these conditions, the zinc contained in the EAF dust is gradually leached in the form of water-soluble zinc salts, with a yield greater than 70% based on the total zinc present in the EAF dust, according to the following chemical reactions:

[OH⁻]+ZnO+H₂O = Zn(OH)₃⁻

2[OH⁻]+ZnO+H₂O = Zn(OH)₄²⁻

As a result, an aqueous phase containing a main fraction of zinc in the form of Zn²⁺ is obtained (also referred to as leached solution), along with a non-leached solid residue containing undissolved elements, mainly zinc ferrite or franklinite. The zinc solubilized into the leached solution in this step comes essentially from the zincite phase present in the dust.

In a particular embodiment, the alkaline agent that may constitute the alkaline aqueous solution may be selected from typical alkaline agents such as hydroxides, carbonates, bicarbonates or mixtures thereof, provided that the resulting alkaline aqueous solution has a pH higher than 12. The alkaline aqueous solution used in step (c) is, preferably, an aqueous medium which contains sodium hydroxide, optionally in combination with other alkaline agents.

In a particular embodiment, the alkaline aqueous solution of step (c) is a sodium hydroxide (NaOH) solution. In a more particular embodiment, the concentration of NaOH in the alkaline aqueous solution is from 5 to 10 M. In another particular embodiment, the alkaline aqueous solution of step (c) is a 6M, 8M or 10M NaOH solution.

In a particular embodiment, the concentration of EAF dust in the alkaline aqueous solution of step (c) ranges from 10 g/L to 500 g/L, preferably from 50 to 250 g/L. In a more preferred embodiment, the concentration of EAF dust in the alkaline aqueous solution of step (c) is about 100 g/L.

The EAF dust is leached in the alkaline aqueous solution in step (c) at a temperature in the range from 75°C to 95°C. In a particular embodiment, the temperature of step (c) ranges from 80 to 95 °C, preferably from 85 to 95 °C. More preferably, the temperature of step (c) is about 90 °C.

Said leaching step (c) with the alkaline aqueous solution takes place preferably with a residence time between 0.5 and 7 h, more preferably between 0.5 and 5 h. Most preferably, the residence time in step (c) is about 2 hours.

Advantageously, the alkaline aqueous solution used to leach the EAFD can be a recycled solution resulting from the zinc recovery process according to step (g) of the process of the invention.

### Step (d)

This step consists in adding solid caustic soda (NaOH) to the solid residue resulting from step (c) and heating the resulting mixture to yield a melted product. The melted product thus obtained comprises franklinite species dissolved in a NaOH medium at high temperature.

The conditions of this step allow the franklinite present in the non-leached solid residue from step (c) to transition into iron oxide (Fe₂O₃) and zinc oxide (ZnO) species, thus releasing up to a 75% of the zinc remaining in said residue.

In a particular embodiment, the weight ratio of solid NaOH to the solid residue in step (d) ranges from 0.5:2 to 5:0.5, preferably 1:2 to 5:1, more preferably from 1.2:1 to 3:1, most preferably 1.5:1.

The resulting mixture is heated to a temperature and for a time sufficient to melt the mixture and release zinc from the franklinite species. In a particular embodiment, the heating is performed at a temperature between 350 and 1500 °C. In a preferred embodiment, the heating is performed at a temperature between 300 and 700 °C. More preferably, the heating is performed at a temperature between 400 and 600 °C, even more preferably, the heating is performed at a temperature of about 500 °C.

The mixture may be heated by any appropriate heating means known in the art allowing to reach the desired effect. In a particular embodiment, the heating can be carried out in a conventional furnace such as a muffle furnace. In an alternative embodiment, the heating can be carried out in a microwave oven (i. e., under microwave irradiation).

The residence time preferred for this step is dependent on the particular heating means, but generally a period between 0.5 minutes and 4 hours is suitable.

In a particular embodiment, the heating is performed during a time between 1 and 4 hours. In a more particular embodiment, the heating is performed during about 2 hours. In an even more particular embodiment, the heating is performed at a temperature of about 500 °C for a period of between 1 and 4 hours, preferably about 2 hours. More preferably, said heating is performed in a muffle furnace.

In a particularly preferred embodiment, the heating is performed under microwave irradiation.

In a more preferred embodiment, the heating under microwave irradiation is performed for a period of less than 60 minutes, preferably less than 20 minutes, more preferably less than 10 minutes. In another particular embodiment, the heating of step (d) is performed between 0.5 and 30 minutes, preferably between 1 and 10 minutes, more preferably between 2 and 6 minutes.

In a particular embodiment, the heating under microwave irradiation is conducted under a microwave power ranging between about 500 to about 1200 watts, preferably from about 750 to about 1000 watts. In a preferred embodiment, the heating is performed under microwave irradiation at a temperature between 400 and 600 °C, more preferably of about 500 °C for a period of less than 20 minutes, preferably for a period of less than 10 minutes, more preferably between 2 and 6 minutes.

### Step (e)

In this step, the melted product from step (d) is immediately added to the aqueous leaching solution resulting from step (c), which has been maintained at a temperature of 75-95 °C and high alkalinity. Upon introducing the melted product into the leaching solution, the resulting mixture is kept at a pH and temperature close to that reached in the leaching of step (c), *i. e*., at a pH of at least 12 and at a temperature between 75 and 95 °C, in order to solubilize the zinc and sodium, as well as precipitating iron ions contained in the melted product, thus obtaining a zinc-rich liquor.

ZnFe₂O₄ (s) + 8 NaOH (s) → Na₂ZnO₂ (s) + 2Na₃FeO₃ (s) + 4 H₂O (step d)

Na₂ZnO₂ (s) + 2Na₃FeO₃ (s) + 5 H₂O → Na₂Zn(OH)₄ + 2 Fe(OH)₃ (s) + 6 NaOH (step e)

In a particular embodiment, the weight ratio of melted product to alkaline aqueous solution in step (e) ranges from 10 g/L to 500 g/L, preferably from 50 to 250 g/L. In a more preferred embodiment, the ratio of melted product to alkaline aqueous solution of step (c) is about 100 g/L.

The mixture comprising the melted product and the alkaline aqueous solution in step (e) is at a temperature in the range from 75°C to 95°C. In a particular embodiment, the temperature of step (e) is kept at a temperature ranging from 80 to 95 °C, preferably from 85 to 95 °C. Preferably, the temperature of step (e) is about 90 °C.

The mixture comprising the melted product and the alkaline aqueous solution in step (e) is at a pH higher than 12. The alkaline aqueous solution used for this leaching step is the leached solution resulting from the leaching of step (c) containing leached zinc and the alkaline aqueous solution used for said step. Thus, the alkaline aqueous solution can be any of those mentioned for the leaching of step (c). Preferably, the alkaline aqueous solution of step (e) is a sodium hydroxide (NaOH) solution. In a more particular embodiment, the concentration of NaOH is from 5 to 10 M. In another particular embodiment, the concentration of NaOH in step (e) is 6M, 8M or 10M.

In a particular embodiment, the temperature and pH of the mixture comprising the melted product and alkaline aqueous solution are maintained constant for a residence time between 0.5 and 7 h, more preferably between 0.5 and 5 h. Most preferably, the residence time in step (e) is about 2 hours.

The products obtained in this step are a solid residue containing mainly iron oxides and a minor percent of non-leached franklinite, i. e., less than about 5%; and zinc-rich liquor containing up to 95% of the initial zinc contained in the EAF dust, along with some impurities such as Si, Pb, Ca, Mn.

The zinc-rich liquor thus obtained may optionally be sent to a purification step as described in step (f) to at least partially remove said impurities; or may directly be subjected to a zinc recovery step as described herein below without further purification.

### Step (f)

The zinc-rich liquor obtained in step (e) may be subjected to a further purification treatment in order to reduce the content of other metal impurities present therein, thus contributing to obtain zinc with higher purity in a subsequent zinc recovery step as further described herein below.

In a particular embodiment, the zinc-rich liquor obtained in step (e) is subjected to a cementation step with zinc powder. Said zinc powder displaces solubilized metal impurities and therefore, triggers the precipitation of the metal impurities such as Pb, Cu and Cd which are separated and removed.

The cementation of metals proceeds according to the following reaction, where (M) represents the metal atom of the corresponding metal impurity:

Zn+Na₂MO₂→Na₂ZnO₂+M

In a particular embodiment, the amount of zinc powder added is from 1 to 4 times the stoichiometric amount required, preferably from 1 to 2 times the stoichiometric amount required. In another preferred embodiment, the zinc powder is added in a stoichiometric excess of at least 50%. In a preferred embodiment, the zinc powder is added in a stoichiometric excess of at least 80%.

In a particular embodiment, the cementation step is performed at a temperature between room temperature and 60 °C, preferably between 25 and 50 °C, more preferably about 30 °C.

In a particular embodiment, the residence time of the cementation step is between 5 min and 5 hours, preferably from 10 to 60 min, more preferably about 30 min.

In a preferred embodiment, the cementation step is performed at a temperature of 25 to 50 °C for a period of about 30 minutes

As a result, a purified liquor containing dissolved zinc is produced and separated from the precipitated metal impurities. The concentration of the metal impurities is reduced to below 100 ppm, preferably to a concentration range between 1-10 ppm. The solid residue containing the precipitate of metal impurities resulting from the cementation step is removed from the process or undergoes its own elimination treatment.

The zinc-rich purified liquor thus obtained may then be subjected to a zinc recovery step as described herein below.

### Zinc recovery

The zinc extracted from the EAF dust may be recovered from the zinc-rich liquor originated in step (e) and/or from the purified zinc-rich liquor originated in step (f).

The zinc can be recovered according to a process selected from electrowinning, crystallization, precipitation and combinations thereof. However, other processes suitable to recover zinc known in the art can also be used.

In a preferred embodiment, the recovery of the zinc extracted from the EAF dust is made by electrowinning. As used herein, the term electrowinning refers to an electrochemical method to recover elemental metal by processing aqueous solutions containing dissolved metal ions. Electrowinning applies an electrical current to electrodes immersed in an aqueous solution such that positively charged metal ions migrate to the negative electrode, where the metal ions are reduced to elemental metal.

Thus, the zinc-rich liquor obtained in step (e) and/or the purified zinc-rich liquor obtained in step (f) may be transferred into an electrolytic cell in order to conduct a zinc electrowinning process. Any suitable electrolytic cell known in the art may be used. Nonetheless, the operating conditions achievable in accordance with various embodiments of the present invention will depend upon the specific configuration of the electrolytic cell.

In a particular embodiment, the electrowinning treatment is conducted in a cylindrical cell that comprises a stainless steel anode and a magnesium cathode, with a spacing distance between the two electrodes of about 1 to 3 cm.

In a particular embodiment, a current density of from about 10 to about 250 mA per square centimeter of electrode is maintained, In a more particular embodiment, the operating current density of the electrolytic cell is in the range of 30-150 mA/cm².

In a particular embodiment, the flow rate of the zinc-rich liquor in the electrolytic cell ranges between 0.1 and 1 m/s, preferably between 0.25 and 0.5 m/s.

In a particular embodiment, the temperature of the liquor in the electrolytic cell is maintained at from about room temperature to about 60 °C. In accordance with one preferred embodiment, the liquor is maintained at a temperature of from about 30 °C to about 50 °C.

In a particular embodiment, the zinc concentration in the zinc-rich liquor for electrowinning is in a range of from about 5 to about 40 grams of zinc per liter of liquor.

The conditions of this step allow the recovery of the zinc dissolved in the zinc-rich liquor by electrodeposition on the cathode surface.

The metallic zinc thus formed may be detached from the cathode by any means adapted to separate the metal from the cathode known in the art. In a particular embodiment, the zinc deposited in the cathode is detached by injecting pressurized air into the cell.

The metallic zinc thus detached from the cathode remains in the liquor in suspension in the liquor. The metallic zinc may be then separated from the liquor by any solid-liquid separation means known in the art, such as, for example, decantation, filtration, or centrifugation. More particularly, by filtration.

Thus, in a more particular embodiment, the recovery of the zinc extracted from the EAF dust is made by a process comprising the steps of:
g) subjecting the zinc-rich liquor from step (e) or purified zinc rich liquor from step (f) to electrolysis in an electrolytic cell at a current density of 100-150 mA/cm2 and a liquor flow velocity of 0.25-0.5 m/s to deposit the zinc from the liquor at the cathode;
h) detaching the zinc deposited in step (g) into the liquor by pneumatic injection; and
i) filtering the detached zinc of step (h) to obtain metallic zinc and a zinc-depleted aqueous solution.

After separation, the metallic zinc may be washed and/or dried. In a particular embodiment, the metallic zinc obtained in step (i) is washed with a NaOH solution and, optionally, dried at 25-80 °C under an inert atmosphere, such as a nitrogen or argon atmosphere.

By means of this process, the metallic zinc obtained has a high purity. In a particular embodiment, the metallic zinc has a purity of at least 90%, preferably a purity between 93 and 99%.

Once the zinc has been recovered, a zinc-depleted aqueous solution with high alkalinity remains, which can be partially or totally recycled to be used in other steps of the process of the invention.

Thus, in a first alternative, the zinc-depleted aqueous solution resulting from step (i) is partially or totally recycled to the leaching of step (c).

In a particular embodiment, the solution of step (i) may be subject to evaporation to reach a target concentration of the alkaline agent present in the zinc-depleted aqueous solution, prior to being recycled to step (c). Additionally, or alternatively, the solution may be treated with an alkali agent to adjust the pH of the resulting solution to at least 12, prior to being recycled to step (c).

Thus, in a more particular embodiment, the method of the invention comprises:
- subjecting at least part of the zinc-depleted aqueous solution obtained in step (i) to evaporation and/or addition of an alkali agent to obtain an alkaline aqueous solution with a pH of at least 12; and;
- recycling the alkaline aqueous solution to the leaching step (c).

In a particular embodiment, the alkaline agent in the zinc-depleted aqueous solution from step (i) is NaOH, and the solution is subject to evaporation to a target NaOH concentration ranging between 5 M and 10 M, preferably the target NaOH concentration is 8 M.

The alkaline agent added to the zinc-depleted aqueous solution may be any of those mentioned for the leaching of step (c) such as hydroxides, carbonates, bicarbonates or mixtures thereof, provided that the pH of the resulting alkaline aqueous solution is at least 12. Preferably, the alkaline agent added to control the pH of the alkaline aqueous solution is sodium hydroxide, optionally in combination with other alkaline agents.

In a second alternative, the zinc-depleted aqueous solution of step (i) may be partially or totally sent to a further purification step prior to being recycled to step (c) of the process, thus contributing to assure an extremely low impurity level required in the zinc extracted product.

In a more particular embodiment, a small part of the zinc-depleted aqueous solution of step (i) is separated from the main stream and subjected to this further purification step. In a particular embodiment, said small part represents a maximum of 25% of the volume of the total stream, and preferably from 5 to 15% in volume.

Said purification step can be conducted in the presence of an acid to achieve the reduction of the pH of the solution to 12 or less. In a more particular embodiment, the acid is selected from sulphuric acid, hydrochloric acid, nitric acid, hydrofluoric acid, and mixtures thereof. Preferably, the acid is sulfuric acid.

In a more particular embodiment, the acid is in the form of an aqueous solution with an acid concentration in the range of from about 50 to about 500 g/L, preferably in the range of 100 to 300 g/L, more preferably the acid concentration is about 200 g/L.

In a particular embodiment, said contacting with the acid takes place preferably with a residence time between 0.1 and 5 h, more preferably between 0.25 and 1 h.

After this purification step, a precipitated solid residue containing mainly Zn, Si, and Al oxides is obtained, as a result of the reduction of the pH of the solution. The remaining purged aqueous solution from the precipitation process may be reintroduced into the process, having a reduced amount of metal impurities. Preferably, the conditions of this step allow the removal of at least an 80% of Si and Zn, as well as at least 6% of Al with respect to the initial content of the purged volume.

This allows the supply of an ultra-pure aqueous alkaline solution to the leaching of step (c). Therefore, the total purity in the leaching step is maintained and it can be considered a useful tool to prevent external contamination of the final zinc product.

In a particular embodiment, said purged aqueous solution may be subject to evaporation to reach a final alkali agent concentration, prior to being recycled to step (c). In a further particular embodiment, said purged solution may be treated with an alkali agent controlling the pH, prior to being recycled to step (c).

Thus, in a more particular embodiment, the method of the invention comprises:
- subjecting at least part of the zinc-depleted aqueous solution obtained in step (i) to a precipitation step by contacting said solution with an acid, thus resulting in a solid precipitate containing metal oxides and a purged aqueous solution,
- subjecting the purged aqueous solution to evaporation and/or addition of an alkali agent to obtain an alkaline aqueous solution with a pH of at least 12;
- recycling the alkaline aqueous solution to the leaching step (c).

Particular and preferred embodiments for the zinc-depleted aqueous solution from step (i), the evaporation and/or the addition of an alkaline agent prior to the recycling of the alkaline aqueous solution to step (c) are the same as those of the first alternative as defined above.

The following example illustrates the invention and must not be considered as limiting the same.

### EXAMPLES

The invention will be better understood through an example of the process according to the invention as described below. The flow chart of Figure 1 also serves as support to understand the different steps of the process described in this example.

### EXAMPLE 1:

The EAF dust used as feed contained 34 wt% of zinc. The main impurities present in the dust material were Si, Al, Fe, Cu, Cd, Pb.

Firstly, the EAF dust was washed with a stream of 3 Kg water for each Kg of dust at room temperature to reduce the content of water-soluble ions, and then was fed to a leaching unit (A). Namely, 400 g of said dust were added as feedstock to the leaching reactor together with 4 L of NaOH 8M as leaching solution achieving a concentration of the dust of 100 g/L. The average leaching pH in the reactor was maintained at a value of 12, whereas the temperature was set at a constant value of about 90°C, for a residence time of 2 h.

The resulting leached solution (also referred to as PLS1) leaving the leaching unit (A) was then fed directly to the quenching/leaching unit (B) maintaining the pH in the reactor at a value of 12 and the temperature at about 90°C.

The solid residue (238 g) leaving the leaching reactor (A) was flowed to a microwave reactor (500°C, 5 min) and solid NaOH was added (357 g) to achieve a NaOH:residue weight ratio of about 1.5:1. The mixture was melt by heating under microwave irradiation. A microwave power source of 900 watt was used to reach the operating temperature (500 °C) for a residence time of 5 minutes.

The melted product was then immediately introduced in the quenching/leaching unit (B) and contacted with the leached solution PLS1 maintained at a NaOH concentration of 8 M (pH=12) and a temperature of 90 °C. The concentration of melted product in this step was 100 g/L. The operating conditions for this step once the microwave melted product is in the leached solution PLS1 are 90 °C and NaOH concentration of 8 M (pH=12) for a residence time of 2 hours. The outlet stream was a 34.6 g/L zinc-rich liquor (also referred to as PLS2).

The zinc-rich liquor (PLS2) resulting from the quenching/leaching unit (B) flowed into the subsequent cementation unit for eliminating co-extracted metal impurities from the zinc-rich liquor. For this step, zinc powder was added to the liquor in a 100% stoichiometric excess. The temperature for this step was 30 °C and the residence time 30 min. The products of this step were a solid residue of Pb, Cd and Cu impurities deposited or cemented on the Zn powder, and a purified liquor with a decreased charge of these metals.

The purified zinc-rich liquor leaving the cementation unit flowed into an electrowinning cell with cylindrical geometry having a solid internal stainless steel cylinder acting as the anode and a concentric hollow magnesium cylinder acting as the cathode. The interelectrode gap was 10 mm. The liquor was flowed between the electrodes at 0.25-0.5 m/s at a temperature of 30-50 °C and a current density of 100-120 mA/cm² of electrode surface was applied to deposit the zinc at the cathode. The deposited Zn was detached from the cathode surface by means of a pneumatic injection between electrodes and filtered from the liquor. A zinc powder product of 93-99% purity was achieved by this process.

The zinc-depleted aqueous stream leaving the electrowinning unit was recirculated into the process. This aqeuos stream was flowed to an evaporation tank to be subjected to water evaporation and addition of fresh NaOH to reach the target concentration of NaOH (8M) required for the leaching step.

A small continuous stream (around 1%) was separated to balance impurities by means of a precipitation step at a downstream precipitation unit. The aqueous stream introduced in the precipitation unit was contacted with sulphuric acid (H2SO4) at 200 g/L to reach a pH ≤12. This step was conducted at 40°C for a residence time of 30 min, which resulted in a precipitated solid residue containing Zn, Si, and Al oxides, and a purged stream to be recirculated into the process.

The purged stream was flowed to the evaporation tank and, after water evaporation and addition of fresh NaOH to reach the target concentration of NaOH (8M) required for the leaching step.

The aqueous stream from the evaporation tank was finally recycled back to the leaching unit (A), closing a process loop.

## Claims

1. A process for the extraction of zinc from an electric arc furnace dust, said process comprising the steps of:
a) providing an electric arc furnace dust;
b) optionally washing said dust to at least partially remove soluble ion impurities;
c) leaching the electric arc furnace dust of step (a) or step (b) in an alkaline aqueous solution having a pH of at least 12 at a temperature between 75 and 95 °C to yield a leached solution and a non-leached solid residue;
d) adding solid NaOH to the solid residue from step (c) and heating the resulting mixture to yield a melted product; and
e) adding the melted product resulting from step (d) to the leached solution from step (c), while keeping the resulting mixture at a pH of at least 12 and at a temperature between 75 and 95 °C to yield a zinc-rich liquor.

2. The process according to claim 1, wherein the alkaline aqueous solution of step (c) is a NaOH solution at a concentration between 5 and 10 M.

3. The process according to claim 1 or 2, wherein the temperature of step (c) is about 90 °C.

4. The process according to any of the previous claims, wherein the weight ratio of solid NaOH to solid residue in step (d) ranges from 1.2:1 to 3:1.

5. The process according to any of the previous claims, wherein the heating of step (d) is performed under microwave irradiation at a temperature between 400 and 600 °C for a period of less than 20 minutes.

6. The process according to any of the previous claims, wherein the temperature of step (e) is maintained at about 90 °C for a period of about 2 hours.

7. The process according to any of the previous claims, wherein the optional washing of step (b) is conducted with a stream of water at room temperature, being the dust to water weight ratio between 1:1 and 1:5.

8. The process according to any of the previous claims further comprising subjecting the zinc-rich liquor of step (e) to a cementation step (f) by addition of zinc powder to form a purified zinc-rich liquor and a cement residue containing metal impurities.

9. The process according to claim 8, wherein the cementation step is performed at a temperature of 25 to 50 °C for a period of about 30 minutes.

10. The process according to claim 8 or 9, wherein the zinc powder is added in a stoichiometric excess of at least 80%.

11. The process according to any of the previous claims further comprising recovering the zinc contained in the zinc-rich liquor of step (e) or step (f) by an electrodeposition method comprising:
g) subjecting the zinc-rich liquor to electrolysis in an electrolytic cell at a current density of 100-150 mA/cm2 and a liquor flow velocity of 0.25-0.5 m/s to deposit the zinc from the liquor at the cathode;
h) detaching the zinc deposited in step (g) into the liquor by pneumatic injection; and
i) filtering the detached zinc of step (h) to obtain metallic zinc and a zinc-depleted aqueous solution.

12. The process according to claim 11, wherein the metallic zinc obtained in step (i) is washed with a NaOH solution and dried under an inert atmosphere.

13. The process according to claim 11 or 12, further comprising:
- subjecting at least part of the zinc-depleted aqueous solution obtained in step (i) to evaporation and/or addition of an alkali agent to obtain an alkaline aqueous solution with a pH of at least 12; and;
- recycling the alkaline aqueous solution to the leaching step (c).

14. The process according to claim 11 or 12, further comprising:
- subjecting at least part of the zinc-depleted aqueous solution obtained in step (i) to a precipitation step by contacting said solution with an acid, thus resulting in a solid precipitate containing metal oxides and a purged aqueous solution
- subjecting the purged aqueous solution to evaporation and/or addition of an alkali agent to obtain an alkaline aqueous solution with a pH of at least 12;
- recycling the alkaline aqueous solution to the leaching step (c).

15. The process according to claim 14, wherein the acid is sulfuric acid.
